# EUROPEAN PATENT APPLICATION

(11) **EP 3 998 183 A1**
(43) Date of publication of application: **18.05.2022**
(21) Application number: 21000276.2
(22) Date of filing: 18.04.2011
(51) Int. Cl.: B62B 3/14

(54) **SHOPPING TROLLEY**

(30) Priority: 25.10.2010 ES 201031555
(62) Divisional of application: 11003225.7
(71) Applicant: Creaciones Marsanz, S.A., 28850 Torrejon de Ardoz Madrid (ES)
(72) Inventor: MILLAN FERNANDEZ, Javier, 28850 Torrejon de Ardoz (Madrid) (ES)
(74) Representative: Botella Reyna, Juan

(57) **Abstract**

The trolley of the invention, being of the type constituted from the use of a metallic rolling frame and a basket made of plastic, focusing its characteristics on the fact that, it allows the transfer of the vertical forces provoked by the load in a more uniform way, from a pair of supports with an inverted "U" configuration to which the basket is coupled at its lower base, while at the corresponding edges which define the lateral borders of the rear side of the basket, said edges incorporate lower longitudinal and blind holes (6), designed to receive a bar (7), which emerges from the rolling frame, defined at the bottom of each blind hole or transmission point of the cited vertical forces. The invention also affects the means which are directly connected to the means of pushing the trolley and to the displaceable wall of the same. (Figure 1).

## Description

### Shopping trolley

### Object of the invention

The present invention relates to a shopping trolley, of the type normally used in supermarkets and department stores to transport the selected products to the check outs, and has a structure such that, said trolley is horizontally stackable/nestable with others of the same type, through the insertion of the majority of the basket of one into the basket of another, resulting in minimum volumetric occupation in the case of storage. The object of the invention is to provide a trolley that is structurally simple, robust, light, easy and fast to assemble, with a reduced cost of manufacture.

### Background of the invention

In the field of practical application of the invention, multiple types of shopping trolley are known, which on a rolling frame, equipped with the corresponding means of pushing, incorporate a basket that has a displaceable rear wall, that has greater dimensions than the front wall so that the basket of one trolley can be inserted into the basket of another, through the displaceable rear wall and as such successively, allowing a large number of trolleys to be stacked horizontally, with minimum volumetric occupation.

This type of basket is usually produced with a structure made from metallic rods which, must be soldered into position, which implies extremely long manufacture times, in addition to the need for very specialised labour, which means high final costs of manufacture which in all likelihood it would be desirable to reduce. Attempting to avoid this problem, there are shopping trolleys that are known in which, starting equally from a rolling frame made of metal, the basket which is connected to them is made of plastic.

Although using this solution it is possible to reduce the production time of the baskets considerably, and consequently of the trolleys, the means of attaching the basket to the rolling frame are not as effective as they should be, producing oscillations in the assembly, to which it is necessary to add the problem which exists regarding the assembly of the means of pushing the trolley with respect to the basket.

In this way, in the invention in European Patent 01962554, in which, made from a metallic rolling frame, and a basket made out of plastic, the rolling frame is lengthened at its rear area by a pair of bars that pass through hollow housings established in relation to the vertical and rear edges of the basket, in such a way that, said bars are extended upwards so as to become the complementary means of pushing, in such a way that the basket is supported by its lower base in an inverted "U" support joined to the rolling frame.

As a result, and with it being possible to pass the rear bars through the holes to connect the basket, the vertical force generated by the load which will be introduced into the basket are supported exclusively by the inverted "U" support, given that the rear bars will exclusively have a stabilising effect on the basket, in order to impede oscillations in the same due to rocking motions, which subjects the said inverted "U" support to high forces, leading this to being increased in size accordingly, with the consequent costs that this implies.

Finally, it is worth mentioning, the essential displaceable gate or wall which is established in relation to the front of the trolley, which allows the insertion of the majority of the basket of one trolley into that of another when stacking, must be attached to the basket through means of hinging, which in this case are independent to the means of pushing, which complicates the assembly of the same.

### Description of the invention

The shopping trolley which this invention proposes solves in a fully satisfactory way the aforementioned problems, due to the new structure which, based on the use of a metallic rolling frame, and a basket made from plastic, it allows a more uniform distribution of the vertical forces generated by the load of the basket, through the incorporation of a greater number of points of vertical support in addition to simplifying the assembly work of the means of pushing the trolley, all of this with a high degree of flexibility in assembly. For this purpose, and more specifically, the invention begins, as previously mentioned, with a metallic rolling frame, from which a lower base is established, of any conventional type, on which there are four swivel casters attached, with the particularity that, from said frame there emerges a structure on which the lower base of the basket is supported, with it being envisaged that, the cited basket has corresponding to its edges which delimit the lateral edges of the front of the basket, two blind holes corresponding to the lower end of the cited edges, in such a way that in said blind holes a pair of bars can be inserted which emerge from the rolling frame, corresponding to their rear vertices, in such a way that, said blind holes will have a considerable length, stabilising the basket in its assembly, and such that the end of the holes act as a limiting buffer of penetration, which will be designed in such a way that the assembly of the basket reaches its limit when the lower base of the basket is interlocked with the supporting structure of the frame, as such providing a greater number of support points which allows a distribution of vertical forces generated by the load contained in the basket to be obtained that means that the trolley is subjected to lower point forces, extending its useful life.

The cited basket, obtained by injection plastic moulding will have, as is conventional, an inverted isosceles trapezoid cross section, open both at the upper part and the rear part, in such a way, as is conventional, and corresponding to the front it is designed to have a displaceable wall, also made from plastic, which is exactly connected with the basket through the means of pushing of the same.

More specifically, it is envisaged that corresponding with the two rear vertical vertices of the opening of the basket, a staggered narrowing is included designed to have an arm inserted, made from plastic, equipped with a recess configured in relation to said staggered narrowing, with the particularity that corresponding with the internal face of said recess, the body of said arm incorporates a "U" shaped groove, appropriately shaped and sized to allow it to be passed through the swivel axis of the rear and displaceable wall of the basket, which becomes a widening ring or perimeter flange which impedes the exit of the axis, flange which stays housed in the centre of the cited recess established in the arm.

Said arms will be finished with a cylindrical extension at the rear, designed to house the bar for pushing the trolley.

Regarding the displaceable wall of the basket, this could exclusively have a lattice surface, the same as the rest of the walls and the bottom of the basket, in order to lighten the same, or rather, as is conventional with this type of trolley, it could be accompanied by the complementary mechanism for carrying babies.

In a similar way, it is envisaged that in relation to the upper border of the front wall of the basket, it incorporates an appropriately shaped and sized window to allow the manual pulling of the trolley.

Finally, and as is evident, it is worth mentioning that the different pieces obtained in plastic could be produced with recesses or notches distributed in a way that allows a saving in materials and a reduction in weight as result of such, whenever it does not put the structural integrity of the trolley at risk.

### Description of the diagrams

To complete the description that is being made and with the object of assisting in a better understanding of the characteristics of the invention, in accordance with a preferred example of practical embodiment thereof, accompanying said description as an integral part thereof, is a set of drawings wherein, by way of illustration and not restrictively, the following has been represented:

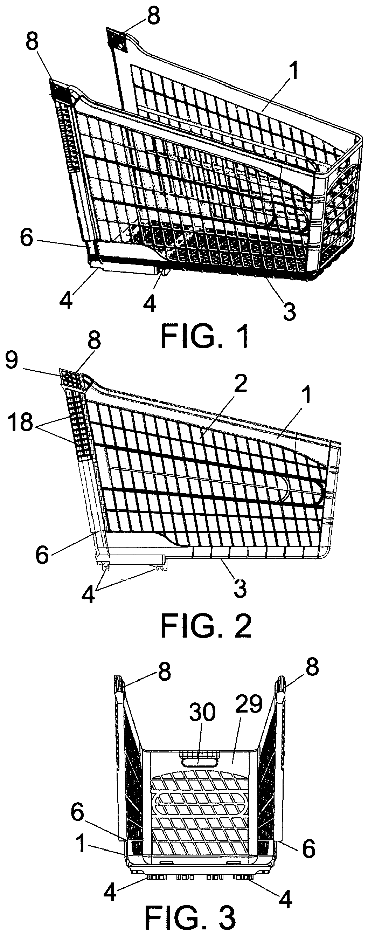

Figure 1.- Shows a perspective view of the basket which is a part of the shopping trolley object of the present invention.
Figure 2.- Shows a side view of the basket in the previous figure.
Figure 3.- Shows a rear elevation view of the basket in the previous figures.
Figure 4.- Shows a plan view of the basket in the previous figures.
Figure 5.- Shows a detail similar to that in figure 2, but in which the means of pushing the trolley are represented, in addition to the means which connect the rolling frame to the basket, rolling frame that has not been represented due to the fact that the same could be of very different forms, according to any conventional solution.
Figure 6.- Shows an elevation view of the arm that holds the means of pushing and which is connected to the basket at its displaceable rear wall.
Figure 7.- Shows a plan view of the piece in the previous figure.
Figure 8.- Shows a side view of the piece in figures 6 and 7.
Figure 9.- Shows an elevation view of the displaceable rear wall of the basket.
Figure 10.- Shows a side view of the piece in the previous figure.
Figure 11.- Shows an elevation view of the displaceable rack which is part of the mechanism for carrying babies on the trolley.
Figure 12.- Shows an elevation view of one of the two covers which couple to the piece in the previous figure.

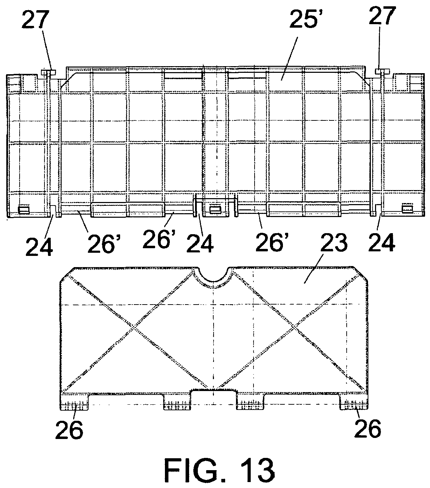

Figure 13.- Shows a plan view of the two pieces which superimposed constitute the base or seat which together with the piece from figure 11 and connected to the displaceable rear wall of the basket compose the mechanism for carrying babies on the trolley.

### Preferred embodiment of the invention

As previously mentioned, in the figures the rolling frame which is a part of the present invention is not represented due to the fact that this will be of any conventional type, without it affecting the essence of the invention, this defined as having four casters, with at least two of these of a swivel type.

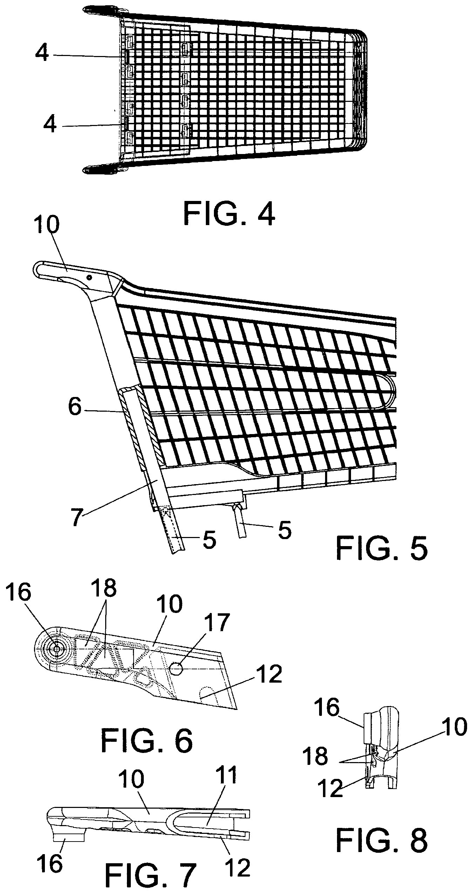

Moreover, the lower frame, made of metal, will be attached to a basket (1), made out of plastic, whose walls and bottom will have a lattice structure (2), in order to lighten the basket in addition to reducing the costs of the same through savings in materials, basket (1) with an inverted isosceles trapezoid cross section, open at the upper part and the rear part, to whose lower base (3) two transverse alignments of jagged fins are attached, designed to accept a pair of supports (5) with an inverted "U" configuration, visible in figure 5, made out of metal and joined to the rolling frame, while in relation to the edges which define the lateral borders of the rear wall of the basket, said edges incorporate longitudinal blind holes (6), designed to house a bar (7), which emerges in the same way as the supports (5) of the rolling frame, penetrating up to an area approximately corresponding to the average area of both cited edges, the end of each blind hole acting as a limit or transmission point for the vertical force generated by the load contained in the trolley by the rolling frame.

In turn, the basket incorporates two staggered recesses (8) corresponding to its upper and lower vertices, with holes (9) which two arms (10) pass through to be fixed by screws or rivets, especially visible in figures 6 to 8, arms (10) made out of plastic, which includes at one of their ends housing (11), suitably shaped and sized to receive the staggered recesses (8) by the interlocking of the same, in addition to a "U" shaped groove (12), appropriately shaped and sized to allow the passage of the swivel axis (13) of the rear and displaceable wall (14) of the basket, axis which becomes a flange (15) which impedes its exit, and in which it stays housed in the arm housing (11).

Said arms (10) will be finished off at the rear as two cylindrical appendices (16) for the coupling of the push bar of the trolley, while corresponding to the through hole (9) a complementary through-hole (17) is incorporated through which the corresponding attachment element of the unit can be passed.

As is conventional which this type of device, the arm (10) can be produced with recesses or notches (18) to save materials and lighten the piece, as happens equally with the basket (1) or any other of the other plastic elements of which the trolley is formed.

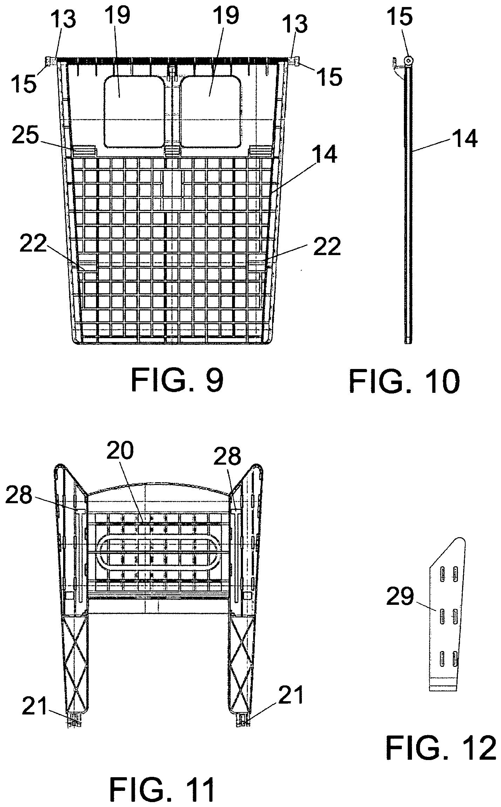

Returning again to the displaceable rear wall (14), the same could optionally incorporate a mechanism for carrying babies, which will be formed by a pair of windows (19) corresponding with the middle-upper area, for the legs of the baby to pass through, in addition to a displaceable rack (20), shown in figure 11, which will include two lower arms riveted to means of hinging (21) that are complementary to the means of hinging (22) established for the displaceable rear wall (14) which are connected to said wall, while the upper part of the displaceable rear wall (14) is connected as a joint to two pieces (23-23') which superimposed define the surface of the seat for the baby being displaceable one over the other by way of hinges (26-26'), disposing of means of swinging (24) complementary to the corresponding axis (25) with which the seat swings, a seat which disposes of "T" shaped struts (27) which fit into the slots (28) found in the displaceable rack (20), limiting the opening angle of the mechanism, defined by the end of the length of the slots (28).

For manufacturing reasons, the opposite side to the slots (28) of the displaceable rack (20) are open, as such they will be complemented with covers (29), as shown in the detail in figure 12.

It only remains to indicate lastly that the forward side of the front (29) of the basket could have a window (30), appropriately shaped and sized to allow the fingers of the user to pass through, defining an additional means for pulling/guiding of the basket to the means of pushing positioned at the rear.

## Claims

1. Shopping trolley, which incorporates a rolling frame, made out of metal, , on which there are four casters attached, at least two of these of a swivel type, frame to which a basket made out of plastic (1) is attached with an inverted isosceles trapezoid cross section equipped with a displaceable rear wall for the horizontal stacking of the trolley, **characterised in that** from the metallic rolling frame emerges a pair of supports with an inverted "U" configuration to which the basket is coupled at its lower base, envisaged with corresponding edges which define the lateral borders of the rear wall of the basket, said edges incorporating lower longitudinal blind holes (6), designed to receive a bar (7), which emerges in the same way as the supports (5) of the rolling frame, at each transmission point of the vertical forces generated by the load contained in the trolley to the rolling frame.

2. Shopping trolley, according to claim 1, **characterised in that** the basket (1) incorporates at the corresponding upper and lower vertices two staggered recesses (8), with orifices (9) which two arms (10) pass through to be fixed by screws or rivets, said arms (10) made out of plastic, which include housing (11) at one of their ends, suitably shaped and sized to receive the staggered recesses (8) by the interlocking of the same, in addition to a "U" shaped groove (12), appropriately shaped and sized to allow the passage of the swivel axis (13) of the rear and displaceable wall (14) of the basket, axis which becomes a flange (15) in which the assembly stays housed in the centre of the housing (11) of the arm, arms (10) which at their rear are finished off as two cylindrical appendices (16) for the coupling of the bar for pushing the trolley.

3. Shopping trolley, according to claim 1, **characterised in that** both the arm (10) and the basket (1) are produced with recesses or notches (18) to save materials and lighten the piece.

4. Shopping trolley, according to claim 1, **characterised in that** the displaceable rear wall (14), incorporates a mechanism for carrying babies, which will be formed with a pair of windows (19) corresponding with the middle-upper area, for the legs of the baby to pass through, in addition to a displaceable rack (20), equipped with two lower arms riveted to means of hinging (21) that are complementary to the means of hinging (22) established for the displaceable rear wall (14) which are connected to said wall, while the upper part of the displaceable rear wall (14) is connected as a joint to two pieces (23-23') displaceable the one to the other and which superimposed define the surface of the seat for the baby, disposing of means of swinging (24) complementary to the corresponding axis (25) with which the seat swings, seat which disposes of "T" shaped struts (27) which fit into the slots (28) found in the displaceable rack (20).

5. Shopping trolley, according to claim 1, **characterised in that** the forepart side of the front (29) of the basket has a window (30), appropriately shaped and sized to allow the fingers of the user to pass through.
